(19) Europäisches Patentamt
European Patent Office
Office européen des brevets

(11) **EP 1 039 447 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
**G10L 15/06** *(2006.01)*

(21) Anmeldenummer: **00200850.6**

(22) Anmeldetag: **10.03.2000**

(54) **Bestimmung einer Regressionsklassen-Baumstruktur für einen Spracherkenner**

Determination of regression classes tree structure for a speech recognizer

Détermination d'une structure d'arbre pour des classes de régression d'un dispositif de reconnaissance de la parole

(84) Benannte Vertragsstaaten:
**DE FR GB**

(30) Priorität: **19.03.1999 DE 19912405**

(43) Veröffentlichungstag der Anmeldung:
**27.09.2000 Patentblatt 2000/39**

(73) Patentinhaber:
• **Philips Intellectual Property & Standards GmbH 20099 Hamburg (DE)**
Benannte Vertragsstaaten:
**DE**
• **Koninklijke Philips Electronics N.V. 5621 BA Eindhoven (NL)**
Benannte Vertragsstaaten:
**FR GB**

(72) Erfinder: **Häb-Umbach, Reinhod 52064 Aachen (DE)**

(74) Vertreter: **Volmer, Georg Philips Intellectual Property & Standards GmbH, Postfach 50 04 42 52088 Aachen (DE)**

(56) Entgegenhaltungen:
• **M.J.F. GALES: "The generation and use of regression class trees for MLLR adaptation" CAMBRIDGE UNIVERSITY ENGINEERING DEPARTMENT - CUED/F-INFENG/TR263, [Online] XP002183889 Cambridge (UK) Gefunden im Internet: <URL:http://citeseer.nj.nec.com/rd/ 9039267 %2C154497%2C1%2C0.25%2CDownload/ http%253A% 252F%252Fciteseer.nj.nec.com/ compress/0/pa pers/cs/ 1463/ftp%253AzSzzSzsvr- ftp.eng.cam .ac.ukzSzpubzSzreportszSzgales_ tr263.ps.gz/gales96generation.ps> [gefunden am 2001-07-20]**
• **MAZIN G RAHIM: "A SELF-LEARNING NEURAL TREE NETWORK FOR RECOGNITION OF SPEECH FEATURES" PROCEEDINGS OF THE INTERNATIONAL CONFERENCE ON ACOUSTICS, SPEECH, AND SIGNAL PROCESSING (ICASSP),US,NEW YORK, IEEE, Bd. -, 27. April 1993 (1993-04-27), Seiten 517-520, XP000399172 ISBN: 0-7803-0946-4**
• **SHIGEKI SAGAYAMA: "PHONEME ENVIRONMENT CLUSTERING FOR SPEECH RECOGNITION" INTERNATIONAL CONFERENCE ON ACOUSTICS, SPEECH & SIGNAL PROCESSING. ICASSP,US,NEW YORK, IEEE, Bd. CONF. 14, 23. Mai 1989 (1989-05-23), Seiten 397-400, XP000089750**
• **S. SHAOBING CHEN, P. DESOUZA: "Speaker Adaptation by correlation (ABC)" PROCEEDINGS OF EUROSPEECH 97, 1997, Seiten 2111-2114, XP002183890 Rhodes, Greece**

EP 1 039 447 B1

**Beschreibung**

Die Erfindung betrifft ein Verfahren zur automatischen Bestimmung einer Regressionsklassen-Bawnstruktur für automatische Spracherkenner mit Wortuntereinheiten repräsentierenden Baumblättern und mit Baumknoten, die Wortuntereinheiten in Abhängigkeit eines Maßes für die Abstände der Wortuntereinheiten im akustischen Raum zusammenfassen.

Die Regressionsklassen-Baumstruktur kann zur Sprecheradaption in automatischen Spracherkennungssystemen, z. B. Diktiersystemen, eingesetzt werden. Eine weitere Einsatzmöglichkeit besteht bei der Bildung der akustischen Modelle in Spracherkennungssystemen.

Eine Spracheradaption wird bei a priori sprecherunabhängigen Spracherkennern zur Anpassung an einen neuen Sprecher eingesetzt, der nicht zu den Sprechern gehört, die zum Training (sprecherunabhängig) des Spracherkenners eingesetzt wurden. Durch eine Spracheradaption kann die Fehlerrate des Spracherkenners, die wegen der nur begrenzten Menge an Trainingssprachdaten häufig unbefriedigend ist, gesenkt werden. In Abhängigkeit von der Menge an verfügbaren Adaptionssprachdaten sinkt die Fehlerrate des Spracherkennens, der sich so besser an den jeweiligen Sprecher anpassen kann. Aber auch schon beim Vorliegen nur einer geringen Menge Adaptionsdaten soll der Spracherkenner schon spürbar, d.h. mit erkennbar reduzierter Fehlerrate, an den jeweiliger Sprecher angepasst sein.

Aus M.J.F. Gales "The generation and use of regression class trees for MLLR adaptation", August 1996, Cambridge University (England), ftp-Adresse: svr-ftp.eng.cam.ac.uk - im folgenden als [1] bezeichnet - ist es bekannt, derartige Regressionsklassen-Baumstrukturen zur Spracheradaption von a priori sprecherunabhängigen Spracherkennern einzusetzen. Die auf Hidden-Markov-Modellen (HMM) basierenden akustischen Modelle von Spracherkennern werden dabei mittels einer linearen Transformation adaptiert, wobei die HMM-Wahrscheinlichkeitsverteilungen angepasst werden. Die dabei verwendete Transformationsmatrix wird aus den Adaptionsdaten mittels eines "Maximum Likelihood"-Ansatzes, d.h. mittels Wahrscheinlichkeitsmaximierung berechnet. Für die beschriebene Adaptionstechnik ist es ein entscheidender Punkt, die in [1] als Komponenten bezeichneten Worrunrereinheiten des zugrundeliegenden Sprachkorpus und zugehörige Hidden-Markov-Modelle in geeigneter Weise in Cluster, die jeweils genau einer Transformationsmatrix zugeordnet sind, zusammenzufassen. Mittels der Baumstruktur werden Regressionsklassen festgelegt, die Cluster von Wortuntereinheiten repräsentieren. Die Baumblätter stehen für Wortuntereinheiten, die als Basis-Regressionsklassen aufzufassen sind. Die Baumknoten (die Cluster von Wortuntereinheiten repräsentieren) fassen um so mehr Wortuntereinheiten bzw. Regressionsklassen zusammen, je näher die Baumknoten bei der Baumwurzel liegen. Die für die Spracheradaption verwendeten Regressionsklassen werden jeweils durch die Menge an verfügbaren Adaptionsdaten festgelegt. Je mehr Adaptionsdaten zur Verfügung stehen, desto näher liegen die für die Spracheradaption verwendeten Regressionsklassen bei den Baumblättern und desto weiter sind sie damit von der Baumwurzel entfernt.

Für die Konstruktion der Regressionsklassen-Baumstruktur werden in [1] zwei Ansätze angeführt. Der erste Ansatz beinhaltet, Expertenwissen bezüglich der phonetischen Struktur der verwendeten Sprache einzusetzen. Derartiges Wissen ist allerdings nicht für alle Sprachen/Sprachkorpora ohne weiteres verfügbar. Es wird angeführt, beispielsweise Nasale in einer Regressionsklasse zusammenzufassen. Auf einer weiter unten liegenden, d.h. weiter von der Baumwurzel entfernt liegenden Stufe könne beispielsweise eine Aufteilung in Phone erfolgen. Der zweite Ansatz geht dahin, dass die Zusammenfassung von Wortuntereinheiten und Regressionsklassen von deren Nähe zueinander im akustischen Raum abhängig gemacht wird, unabhängig davon, zu welchen Phonen sie gehören. Bei diesem datengetriebenen Ansatz mit einer automatischen Konstruktion der Regressionsklassen-Baumstruktur ist kein Expertenwissen erforderlich. Allerdings können die gefundenen Cluster nicht mehr phonetischen Klassen (z.B. Nasalen) zugeordnet werden, d.h. eine anschauliche Interpretation der Klassen ist nicht mehr möglich. Beide Ansätze werden in [1] als nicht unbedingt zu optimalen Ergebnissen führend bezeichnet. Letztlich wird darauf abgestellt, die Wahrscheinlichkeit der Adaptionsdaten zu maximieren. Eine global optimale Baumstruktur sei normalerweise nicht bestimmbar. Allerdings könne man eine lokale Optimierung hinsichtlich der Festlegung der einzelnen Baumknoten erreichen.

Der Erfindung liegt die Aufgabe zugrunde, eine zu zufriedenstellenden Fehlerraten des Spracherkenners führende Ausgestaltung des datengetriebenen und mit einer automatischen Konstruktion der Regressionsklassen-Baumstruktur verbundenen Ansatzes anzugeben.

Die Aufgabe wird erfindungsgemäss durch die angefügten Ansprüche dadurch gelöst, dass die Zusammenfassung von Regressionsklassen zu einer näher bei der Baumwurzel liegenden Regressionsklasse auf der Basis eines Korrelationsmaßes erfolgt.

Dieser Ansatz führte zu Spracherkennerfehlerraten, die sehr nahe bei den Fehlerraten lagen, die man bei der Verwendung einer Regressionsklassen-Baumstruktur erhielt, deren Konstruktion nicht automatisch erfolgte, sondern ausschließlich auf Expertenwissen beruhte.

Eine bevorzugte Ausführungsform des erfindungsgemäßen Verfahrens besteht darin, dass zu Beginn der Bestimmung der Baumstruktur jede Wortuntereinheit eine Basis-Regressionsklasse bildet, dass danach sukzessive jeweils zwei Regressionsklassen mit dem in dem jeweiligen Schritt größten Korrelationsmaß zu einer neuen Regressionsklasse zusammengefasst werden, die in den folgenden Schritten der Baumstrukturbildung anstelle der zwei zusammengefassten Regressionsklassen berücksichtigt wird, bis eine die Baumwurzel darstellende Regressionsklasse gebildet ist. Die Bestimmung der Baumstruktur erfolgt somit rekursiv ausgehend von den Basis-Regressionsklassen/Wortuntereinheiten.

Insbesondere ist vorgesehen, dass zur Bestimmung des Korrelationsmaßes zwischen zwei Wortuntereinheiten ein Korrelationskoeffizient gebildet wird gemäß

$$\rho_{ij} = \frac{R_{ij}}{\sqrt{R_{ii}} \sqrt{R_{jj}}} \text{ mit } R_{ij} = \frac{1}{M} \sum_{m=1}^{M} \left( \mu_i^{(m)} - \frac{1}{M} \sum_{m=1}^{M} \mu_i^{(m)} \right)^T \left( \mu_j^{(m)} - \frac{1}{M} \sum_{m=1}^{M} \mu_j^{(m)} \right)$$

mit

- i und j als Indizes für die beiden Wortuntereinheiten, die noch für eine Zusammenfassung zu einer neuen Regressionsklasse in Frage kommen;
- M als Sprecheranzahl beim Training des Spracherkenners;
- $\mu_i^{(m)}$ als Mittelwertvektor für die i-te Wortuntereinheit und $\mu_j^{(m)}$ als Mittelwertvektor

für die j-te Wortuntereinheit, wobei die Komponenten der Mittelwertvektoren die Mittelwerte von Ausgabeverteilungen von zur Beschreibung der Wortuntereinheiten verwendeten Hidden-Markov-Modellen beschreiben, und dass bei der Zusammenfassung der zwei durch Hidden-Markov-Modelle beschriebenen Wortuntereinheiten zu einer neuen Regressionsklasse für diese neue Regressionsklasse ein zugehöriger Mittelwertvektor, der zur entsprechenden Berechnung weiterer Korrdationskoeffizienten bezüglich dieser neuen Regressionsklasse und einer oder mehrerer anderer Regressionsklassen verwendet wird, durch Linearkombination der den beiden Wortuntereinheiten zugeordneten Mittelwertvektoren gebildet wird.

Vorzugsweise sind als Wortuntereinheiten Phoneme vorgesehen. Diese führen als Basis-regressionsklassen zu Baumstrukturen, die insbesondere für die Spracheradaption von Spracherkennern geeignet sind. Eine weitere Verfeinerung der Baumstruktur ist in der Regel aufgrund der üblicherweise begrenzten Menge an Adaptionsdaten nicht erforderlich.

Eine erste bevorzugte Verwendung der mittels des erfindungsgemäßen Verfahrens hergestellten Regressionsklassen-Baumstruktur besteht darin, dass sie zum Einsatz bei einer Spracheradaption von a priori sprecherunabhängigen automatischen Spracherkennern dient und dass deren Regressionsklassen, die auf der Grundlage derselben Adaptionsdaten zu adaptierende Hidden-Markov-Modelle von Wortuntereinheiten zusammenfassen, in Abhängigkeit von der Menge an verfügbaren Spracheradaptionsdaten verwendet werden.

Eine zweite Verwendung mittels des erfindungsgemäßen Verfahrens konstruierten Regressionsklassen-Baumstruktur besteht darin, dass in Abhängigkeit von der Baumstruktur kontextabhängige Wortuntereinheiten akustischen Modellen zugeordnet werden, wobei mittels der Baumstruktur Kontextkategorien, die der Zuordnung zugrunde liegen, bestimmt werden. Als kontextabhängige Wortuntereinheiten kommen beispielsweise Triphone in Frage. In einer Kontextkategorie werden dann Kontextphoneme zusammengefasst, bei denen angenommen wird, dass sie auf die Aussprache eines bestimmten Kernphonems denselben oder näherungsweise denselben Einfluss haben. Als solche Kontextkategorien werden beispielsweise die Gruppen der Vokale, Plosive, Frikative, ... angesetzt. In K. Beulen, H. Ney, "Automatic question generation for decision tree based state tying", Proc. ICASSP 1998, Seiten 805-808 (im folgenden als [2] bezeichnet) werden solche Kontextkategorien phonetischen Fragen zugeordnet, mittels derer die Zuordnung von Triphon-HMM-Zuständen zu im Spracherkenner eingesetzten akustischen Modellen erfolgt. Diese phonetischen Fragen lassen sich nun leicht mit Hilfe einer mit dem erfindungsgemäßen Verfahren konstruierten Regressionsklassen-Baumstruktur ermitteln.

Die Erfindung betrifft auch ein Spracherkennungssystem, dessen Spracherkennungsprozeduren eine Verwendung einer mit dem erfindungsgemäßen Verfahren konstruierten Regressionsklassen-Baumstruktur vorsehen, insbesondere im Rahmen einer der beiden angegebenen Verwendungen.

Ausführungsbeispiele der Erfindungen werden im folgenden anhand der Zeichnungen näher erläutert. Es zeigen:

Fig. 1 eine Regressionsklassen-Baumstruktur, die nach dem erfindungsgemäßen Verfahren konstruiert wurde,
Fig. 2 ein Flussdiagramm, das zur Erläuterung der Konstruktion der Regressionsklassen-Baumstruktur nach Fig. 1 dient und
Fig. 3 ein Flussdiagramm, mit dessen Hilfe eine Spracheradaption bei einem Spracherkennungssystem neu beschrieben wird.

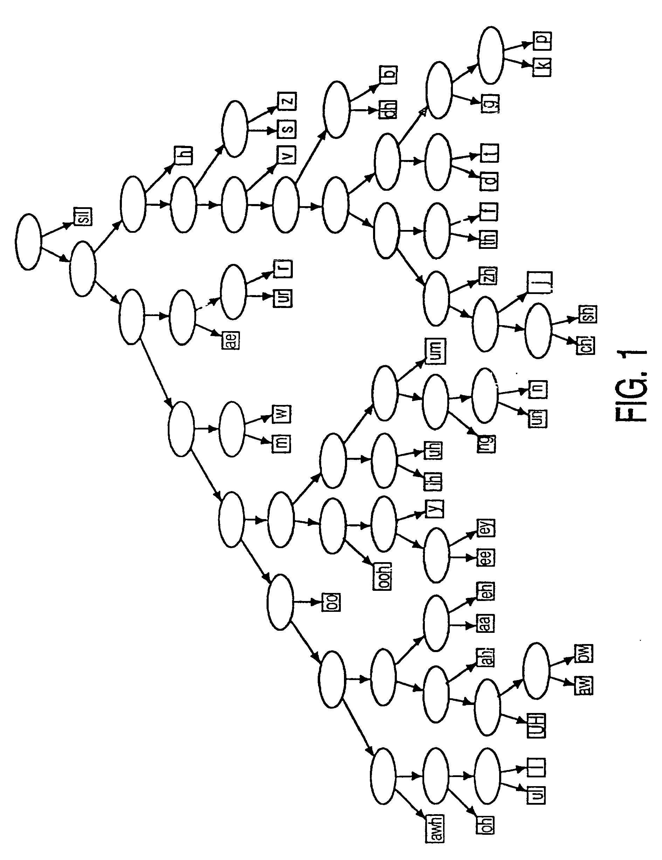

Bei der in Fig. 1 dargestellten Regressionsklassen-Baumstruktur werden als Basisklassen in Rechtecken dargestellte Wortuntereinheiten verwendet. Im vorliegenden Fall sind die Wortuntereinheiten Phoneme, die in Form der Notation des DRAGON-Lexikons in Fig. 1 eingetragen sind. Die Basis-Regressionsklassen repräsentierenden Wortuntereinheiten sind gleichzeitig die Blätter der dargestellten Baumstruktur. Die durch Ellipsen dargestellten Baumknoten repräsentieren Regressionsklassen, die jeweils zwei (Basis-)Regressionsklassen zusammenfassen. Zu Beginn der Bestimmung der Baumstruktur wird von den Basisregressionsklassen ausgegangen. Danach werden sukzessive jeweils zwei Regressionsklassen mit dem jeweils größten Korrelationsmaß zu einer neuen Regressionsklasse durch einen neuen Baumknoten zusammengefasst, der näher an der Baumwurzel liegt als die beiden zusammengefassten Regressionsklassen. In den folgenden Schritten der Baumstrukturbildung wird diese neue Regressionsklasse anstelle der zwei zusammengefassten Regressionsklassen berücksichtigt. Die beschriebene paarweise Zusammenfassung wird solange fortgesetzt, bis eine die Baumwurzel darstellende Regressionsklasse gebildet ist. Im vorliegenden Fall ist eine der beiden zur Baumwurzel zusammengefassten Regressionsklasse stellvertretend für die "Wortuntereinheit" Sprachpause (hier mit sil bezeichnet). Das Korrelationsmaß zwischen zwei Regressionsklassen liefert einen guten Schätzwert für deren akustische Ähnlichkeit. Alternativ zur Verwendung eines Korrelationsmaßes käme beispieLsweise auch die Verwendung des euklidischen Abstands als Abstandsmaß für Regressionsklassenpaare in Betracht. Eine auf dieser Grundlage erzeugte Regressionsklassen-Baumstruktur führt aber zu schlechteren Fehlerraten als dies bei der Verwendung eines Korrelationsmaßes der Fall ist. Zur Bestimmung des Korrelationsmaßes zwischen zwei Wortuntereinheiten wird im vorliegenden Fall ein Korrelationskoeffizient nach der Formel

$$\rho_{ij}=\frac{R_{ij}}{\sqrt{R_{ii}}\sqrt{R_{jj}}} \; \text{ mit } \; R_{ij}=\frac{1}{M}\sum_{m=1}^{M}\left(\mu_i^{(m)}-\frac{1}{M}\sum_{m=1}^{M}\mu_i^{(m)}\right)^T\left(\mu_j^{(m)}-\frac{1}{M}\sum_{m=1}^{M}\mu_j^{(m)}\right)$$

gebildet. Hierbei stellen i und j Indizes für die beiden Wortuntereinheiten dar, die noch für eine Zusammenfassung zu einer neuen Regressionsklasse in Frage kommen und deren Abstand im akustischen Raum abgeschätzt werden soll. M ist die Sprecheranzahl beim Training des Spracherkenners. $\mu_i^{(m)}$ ist der Mittelwertvektor für die i-te Wortuntereinheit und $\mu_j^{(m)}$ ist der Mittelwertvektor für die j-te Wortuntereinheit, wobei die Komponenten der Mittelwertvektoren die Mittelwerte von Ausgabeverteilungen von zur Beschreibung von Wortuntereinheiten verwendeten Hidden-Markov-Modellen darstellen. Bei der Zusammenfassung der zwei Wortuntereinheiten mit dem größten Korrelationskoeffizienten $\rho_{ij}$ zu einer neuen Regressionsklasse wird dieser neuen Regressionsklasse ein neu zu bestimmender Mittelwertvektor zugeordnet. Dieser wird zur entsprechenden Berechnung weiterer Korrelationskoeffizienten bezüglich dieser neuen Regressionsklasse und der übrigen noch nicht durch einen Baumknoten zusammengefassten Regressionsklassen verwendet. Er wird durch Linearkombination der den beiden Wortuntereinheiten zugeordneten Mittelwertvektoren gebildet. Die Wichtungsfaktoren bei der Linearkombination bestimmen sich hierbei aus den Auftrittshäufigkeiten der beiden zusammengefassten Wortuntereinheiten im Trainingsmaterial, wobei insbesondere ein proportionaler Zusammenhang zwischen Auftrittshäufigkeit und Linearkombinationswichtungsfaktor angesetzt wird. Jeder Ellipse in Fig. 1 ist entsprechend den obigen Ausführungen ein bestimmter Korrelationskoeffizient zugeordnet.

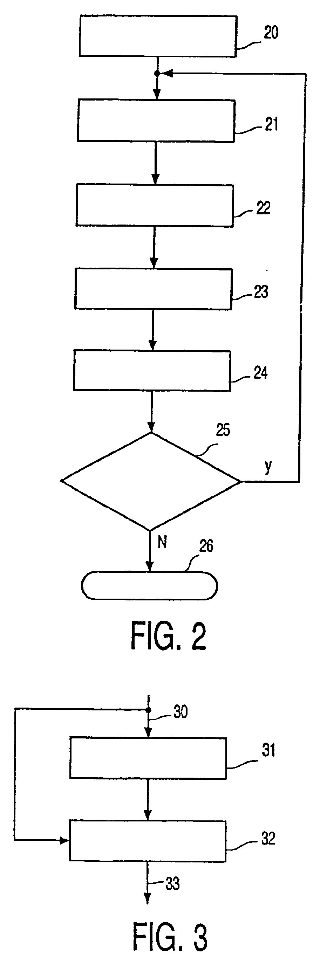

Mittels des in Fig. 2 dargestellten Flussdiagramms soll die Bildung der Regressionsklassen-Baumstruktur gemäß Fig. 1 noch weiter verdeutlicht werden. Zunächst werden in einem ersten Schritt 20 für alle möglichen Paare von Wortuntereinheiten, d. h. Basisregressionsklassen, die hier Phoneme sind, die zugehörigen Korrelationskoeffizienten $\rho_{ij}$ gemäß der oben angeführten Formel gebildet. In einem Schritt 21 wird nun derjenige Korrelationskoeffrzient $\rho_{ij}$ mit dem größten Wert ermittelt. Die beiden Wortuntereinheiten/ Regressionsklassen mit dem größten Korrelationskoeffizienten werden nun in einem Schritt 22 zu einer neuen Regressionsklasse, d. h. einen neuen Baumknoten bzw. ein neues Cluster, zusammengefasst. Für die neue Regressionsklasse wird nun in einem Schritt 23 ein neuer Mittelwertvektor $\mu^{(m)}$ durch Linearkombination der zu den beiden zusammengefassten Regressionsklassen gehörenden Mittelwertvektoren $\mu_i^{(m)}$ und $\mu_j^{(m)}$ gebildet. Die beiden zusammengefassten Regressionsklassen kommen nun als einzelne Regressionsklassen für die Bildung einer neuen Regressionsklasse nicht mehr in Frage, sondern nur noch als Teil eines die zusammengefassten Regressionsklassen enthaltenden Regressionsklassenclusters. Anschließend werden in einem Schritt 24 alle Korrelationskoeffzienten bezüglich der neuen Regressionsklasse und aller noch zur Bildung einer neuen Regressionsklasse verfügbaren Regressionsklassen bestimmt. In einer nachfolgenden Abfrage 25 wird ermittelt, ob noch mehr als eine Regressionsklasse zur Bildung einer neuen Regressionsklasse zur Verfügung steht, d. h. es wird geprüft, ob man noch nicht bei der Baumwurzel angekommen ist. Ist dies der Fall, werden die Schritte 21 bis 24 ein weiteres Mal durchlaufen. Stellt sich bei der Abfrage in Schritt 25 heraus, dass die Baumwurzel erreicht ist, ist mit Schritt 26 das Ende des Algorithmus erreicht.

Anhand von Fig. 3 wird nun nachfolgend eine bevorzugte Verwendung der erfindungsgemäßen Regressionsklassen-Baumstruktur, nämlich die Verwendung bei einer Sprecheradaption von a priori sprecherunabhängigen automatischen Spracherkennern erläutert. Es wird vorausgesetzt, dass Adaptionsdaten 30 und eine aus den beim Training des Spracherkenners verwendeten Trainingsdaten konstruierte Regressionsklassen-Baumstruktur zur Verfügung stehen. In Abhängigkeit von der Menge an verfügbaren Adaptionsdaten wird in Schritt 31 ermittelt, welche Regressionsklassen der Sprecheradaption zugrunde gelegt werden sollen. Je mehr Adaptionsdaten zur Verfügung stehen, desto weiter entfernt werden die verwendeten Regressionsklassen von der Baumwurzel liegen. In Schritt 32 wird nun für jede zur Anwendung kommende Regressionsklasse eine gemeinsame Adaption der akustischen Modelle derjenigen Wortuntereinheiten, die durch die jeweilige Regressionsklasse zusammengefasst sind, vorgenommen. Die Adaption wird durch Multiplikation der jeweiligen Mittelwertvektoren $\mu^{(m)}$ der mit einer gemeinsamen Transformationsmatrix vorgenommen. Für alle mittels einer Regressionsklasse zusammengefassten Wortuntereinheiten kommt dementsprechend eine gemeinsame Transformationsmatrix zur Anwendung. Die Berechnung einer solchen Transformationsmatrix und die Sprecheradaption mit Hilfe einer solchen ist in [1] beschrieben. Hierauf wird an dieser Stelle deshalb nicht weiter eingegangen.

Eine weitere bevorzugte Verwendung der erfindungsgemäß konstruierten Regressionsklassen-Baumstruktur liegt darin, dass in Abhängigkeit von der Baumstruktur Triphone zu akustischen Kontexten zusammengefasst werden, für die jeweils ein Hidden-Markov-Modell geschätzt wird. Durch Entscheidungsbäume oder andere Clusterverfahren werden ähnliche akustische Kontexte identifiziert und zusammengefasst. Für diese ähnlichen akustischen Kontexte wird jeweils ein Hidden-Markov-ModeU geschätzt. Ein typisches System hat beispielsweise ca. 3000 akustische Kontexte, für die jeweils ein getrenntes Hidden-Markov-Modell geschätzt wird. Wenn man - wie üblich - zur Ermittlung der Kontexte Entscheidungsbäume einsetzt; benötigt man eine gewisse Menge von Fragen, die man jeweils in Bezug auf alle möglichen akustischen Kontexte stellt (siehe [2]). Beispielsweise könnte eine Frage dahingehen, ob der Linkskontext des gerade betrachteten Phonems ein Nasal ist oder nicht. Dazu hat man aber bisher phonetisches Expertenwissen bezüglich der zugrundeliegenden Sprache verwendet, d.h. im genannten Beispiel müsste insbesondere das Wissen darüber, was ein Nasal überhaupt ist, vorhanden sein. Mit der erfindungsgemäßen Regressionsklassen-Baumstruktur erhält man nun Phonemgruppen und die Fragen können nun jeweils auf die Zugehörigkeit eines bestimmten Phonems zu diesen Phonemgruppen gerichtet werden.

**Patentansprüche**

1. Verfahren zur automatischen Bestimmung einer Regressionsklassen-Baumstruktur für automatische Spracherkenner mit Wortuntereinheiten repräsentierenden Baumblättern und mit Baumknoten, die Regressionsklassen repräsentieren und die Wortuntereinheiten in Abhängigkeit eines Maßes für die Abstände der Wortuntereinheiten im akustischen Raum zusammenfassen,
**dadurch gekennzeichnet,**
**dass** die Zusammenfassung von Regressionsklassen durch einen Baumknoten zu einer näher bei der Baumwurzel liegenden Regressionsklasse als die in Abhängigkeit eines Maßes für die Abstände der Wortuntereinheiten im akustischen Raum zusammengefassten Regressionsklassen auf der Basis eines Korrelationsmaßes erfolgt.

2. Verfahren nach Anspruch 1,
**dadurch gekennzeichnet,**
**dass** zu Beginn der Bestimmung der Baumstruktur jede Wortuntereinheit eine Basis-Regressionsklasse bildet,
**dass** danach sukzessive jeweils zwei Regressionsklassen mit dem in dem jeweiligen Schritt größten Korrelationsmaß zu einer neuen Regressionsklasse zusammengefasst werden, die in den folgenden Schritten der Baumstrukturbildung anstelle der zwei zusammengefassten Regressionsklassen berücksichtigt wird, bis eine die Baumwurzel darstellende Regressionsklasse gebildet ist.

3. Verfahren nach Anspruch 2,
**dadurch gekennzeichnet,**
**dass** zur Bestimmung des Korrelationsmaßes zwischen zwei Wortuntereinheiten ein Korrelationskoeffizient gebildet wird gemäß

$$\rho_{ij} = \frac{R_{ij}}{\sqrt{R_{ii}}\sqrt{R_{jj}}} \text{ mit } R_{ij} = \frac{1}{M}\sum_{m=1}^{M}\left(\mu_i^{(m)} - \frac{1}{M}\sum_{m=1}^{M}\mu_i^{(m)}\right)^T \left(\mu_j^{(m)} - \frac{1}{M}\sum_{m=1}^{M}\mu_j^{(m)}\right)$$

mit

- i und j als Indizes für die beiden Wortuntereinheiten, die noch für eine Zusammenfassung zu einer neuen Regressionsklasse in Frage kommen;
- M als Sprecheranzahl beim Training des Spracherkenners;
- $\mu_i^{(m)}$ als Mittelwertvektor für die i-te Wortuntereinheit und $\mu_j^{(m)}$ als Mittelwertvektor für die j-te Wortuntereinheit, wobei die Komponenten der Mittelwertvektoren die Mittelwerte von Ausgabeverteilungen von zur Beschreibung der Wortuntereinheiten verwendeten Hidden-Markov-Modellen beschreiben,

und **dass** bei der Zusammenfassung der zwei durch Hidden-Markov-Modelle beschriebenen Wortuntereinheiten zu einer neuen Regressionsklasse für diese neue Regressionsklasse ein zugehöriger Mittelwertvektor, der zur entsprechenden Berechnung weiterer Korrelationskoeffizienten bezüglich dieser neuen Regressionsklasse und einer oder mehrerer anderer Regressionsklassen verwendet wird, durch Linearkombination der den beiden Wortuntereinheiten zugeordneten Mittelwertvektoren gebildet wird.

**4.** Verfahren nach einem der Ansprüche 1 bis 4,
**dadurch gekennzeichnet,**
**dass** die Wortuntereinheiten Phoneme sind.

**5.** Verwendung der nach einem der Ansprüche 1 bis 4 konstruierten Regressionsklassen-Baumstruktur,
**dadurch gekennzeichnet,**
**dass** die Baumstruktur zum Einsatz bei einer Sprecheradaption von a priori sprecherunabhängigen automatischen Spracherkennern dient und
**dass** deren Regressionsklassen, die auf der Grundlage derselben Adaptionsdaten zu adaptierende Hidden-Markov-Modelle von Wortuntereinheiten zusammenfassen, in Abhängigkeit von der Menge an verfügbaren Sprecheradaptionsdaten verwendet werden.

**6.** Verwendung der nach einem der Ansprüche 1 bis 4 konstruierten Regressionsklassen-Baumstruktur,
**dadurch gekennzeichnet,**
**dass** in Abhängigkeit von der Baumstruktur kontextabhängige Wortuntereinheiten akustischen Modellen zugeordnet werden, wobei mittels der Baumstruktur Kontextkategorien, die der Zuordnung zugrunde liegen, bestimmt werden.

**7.** Spracherkennungssystem mit Mitteln angepasst zur Durchführung von Spracherkennungsprozeduren unter Verwendung einer Regressionsklassen-Baumstruktur nach einem der Ansprüche 5 oder 6.

**Claims**

**1.** A method of automatically determining a regression class tree structure for automatic speech recognizers with tree leaves representing word subunits, and with tree nodes representing regression classes and combining the word subunits in dependence on a measure for the distances of the word subunits in the acoustic space, **characterized in that** the combination of regression classes by a tree node to a regression class that lies closer to the tree root than regression classes combined in dependence on a measure for the distances of the word subunits in the acoustic space, is made on the basis of a correlation measure.

**2.** A method as claimed in claim 1, **characterized in that** the method comprises that when the tree structure is initially determined, each word subunit forms a basic regression class, that, subsequently, successively two of regression classes having the largest correlation parameter in the respective step are combined to a new regression class which is taken into account in the next steps of the formation of the tree structure instead of the two combined regression classes, until a regression class representing the tree root is formed.

**3.** A method as claimed in claim 2, **characterized in that** for determining the correlation measure between two word subunits, a correlation coefficient is formed in accordance with:

$$\rho_{ij} = \frac{R_{ij}}{\sqrt{R_{ii}}\,\sqrt{R_{jj}}} \quad \text{with } R_{ij} = \frac{1}{M} \sum_{m=1}^{M} \left( \mu_i^{(m)} - \frac{1}{M} \sum_{m=1}^{M} \mu_i^{(m)} \right)^T \left( \mu_j^{(m)} - \frac{1}{M} \sum_{m=1}^{M} \mu_j^{(m)} \right)$$

with

- i and j as indices for the two word subunits which are still considered for a combination to a new regression class;
- M as the number of speakers during the training of the speech recognizer;
- $\mu_i{}^{(m)}$ as the mean value vector for the $i^{th}$ word subunit and $\mu_j{}^{(m)}$ as the mean value vector for the $j^{th}$ word subunit, the components of the mean value vectors describing the mean values of emission distributions of Hidden-Markov-Models used for describing the word subunits,

and **in that**, when the two word subunits described by Hidden-Markov-Models are combined to a new regression class, for this new regression class an associated mean value vector is formed which is used for the respective calculation of further correlation coefficients relating to this new regression class and one or more other regression classes, by a linear combination of mean value vectors assigned to the two word subunits.

4. A method as claimed in any one of the claims 1 to 3, **characterized in that** the word subunits are phonemes.

5. An application of the regression class tree structure constructed as claimed in any one of the claims 1 to 4, **characterized in that**, the regression class tree structure is used for a speaker adaptation of *a priori* speaker-independent automatic speech recognizers and that their regression classes which, on the basis of the same adaptation data, combine Hidden-Markov-Models of word subunits to be adapted, are used in dependence on the quantity of available speaker adaptation data.

6. An application of the regression class tree structure constructed as claimed in any one of the claims 1 to 4, **characterized in that** in dependence on the tree structure, context-dependent word subunits are assigned to acoustic models while context categories on which the assignment is based are determined by means of the tree structure.

7. A speech recognition system comprising means adapted for carrying out speech recognition procedures by the use of a regression class tree structure as claimed in any one of the claims 5 or 6.

**Revendications**

1. Procédé de détermination automatique d'une structure arborescente pour des classes de régression d'un dispositif automatique de reconnaissance vocale avec des feuilles de l'arborescence représentant des sous-unités de mot et avec des noeuds d'arbre représentant des classes de régression qui combinent les sous-unités de mot en fonction d'une mesure pour les intervalles des sous-unités de mot dans l'espace acoustique,
   **caractérisé en ce**
   **que** la combinaison des classes de régression par un noeud d'arbre en une classe de régression plus proche de la racine de l'arbre comme les classes de régression combinées dans l'espace acoustique en fonction d'une mesure des intervalles des sous-unités de mot est effectuée sur la base d'une mesure de corrélation.

2. Procédé selon la revendication 1
   **caractérisé en ce**
   **qu'**au début de la détermination de la structure arborescente, chaque sous-unité de mot forme une classe de régression de base,
   **qu'**ensuite, deux classes de régression respectivement successives sont combinées avec la mesure de corrélation la plus grande dans l'étape respective en une nouvelle classe de régression qui est prise en considération dans les étapes suivantes de la formation de la structure arborescente à la place des deux classes de régression combinées jusqu'à ce qu'une classe de régression représentant les racines de l'arbre soit formée.

3. Procédé selon la revendication 2,
   **caractérisé en ce**
   **que**, que, pour la détermination de la mesure de corrélation entre deux sous-unités de mot, un coefficient de corrélation est formé conformément à

EP 1 039 447 B1

$$\rho_{ij} = \frac{R_{ij}}{\sqrt{R_{ii}}\,\sqrt{R_{jj}}} \ \text{ avec } \ R_{ij} = \frac{1}{M}\sum_{m=1}^{M}\left(\mu_i^{(m)} - \frac{1}{M}\sum_{m=1}^{M}\mu_i^{(m)}\right)^T\left(\mu_j^{(m)} - \frac{1}{M}\sum_{m=1}^{M}\mu_j^{(m)}\right)$$

avec

- i et j sont des indices pour les deux sous-unités de mot qui sont encore pris en considération pour une combinaison en une nouvelle classe de régression;
- M est le nombre d'orateurs lors de la formation du dispositif de reconnaissance vocale;
- $\mu_i^{(m)}$ est le vecteur de valeur moyenne pour la ième sous-unité de mot et $\mu_j^{(m)}$ comme vecteur de valeur moyenne pour la jème sous-unité de mot, les composants des vecteurs de valeur moyenne décrivant les valeurs moyennes de distributions de sortie de modèles cachés de Markow utilisés pour la description des sous-unités de mots et

**que**, en cas de combinaison des deux sous-unités de mot décrites par les modèles cachés de Markow en une nouvelle classe de régression, un vecteur de valeur moyenne correspondant qui est utilisé pour le calcul correspondant d'autres coefficients de corrélation par rapport à cette nouvelle classe de régression et à une ou plusieurs autres classes de régression est formé pour cette nouvelle classe de régression par combinaison linéaire des vecteurs de valeur moyenne attribués aux deux sous-unités de mots.

4.  Procédé selon l'une des revendications 1 à 4,
    **caractérisé en ce**
    **que** les sous-unités de mot sont des phonèmes

5.  Utilisation de la structure arborescente des classes de régression construite selon l'une des revendications 1 à 4,
    **caractérisée en ce**
    **que** la structure arborescente sert à l'utilisation en cas d'adaptation à l'orateur de dispositif automatique de reconnaissance vocale a priori indépendant de l'orateur et
    **que** ses classes de régression qui sont combinées sur la base des mêmes données d'adaptation en modèles cachés de Markow adaptatifs de sous-unités de mot sont utilisées en fonction de la quantité de données disponibles d'adaptation à l'orateur.

6.  Utilisation de la structure arborescente des classes de régression construite selon l'une des revendications 1 à 4,
    **caractérisée en ce**
    **que** des sous-unités de mot dépendant du contexte sont attribuées en fonction de la structure arborescente à des modèles acoustiques, des catégories de contexte qui sont à la base de l'attribution étant déterminées à l'aide de la structure arborescente.

7.  Système de reconnaissance vocale avec des moyens adaptés à l'exécution de procédures de reconnaissance vocale en utilisant une structure arborescente de classes de régression selon l'une des revendications 5 ou 6.

8

FIG. 1

FIG. 2

FIG. 3